# EUROPÄISCHE PATENTSCHRIFT

(11) **EP 2 044 869 B1**
(45) Veröffentlichungstag und Bekanntmachung des Hinweises auf die Patenterteilung: **22.02.2012**
(21) Anmeldenummer: 08006953.7
(22) Anmeldetag: 08.04.2008
(51) Int. Cl.: A47J 31/54, A47J 31/60, F28G 13/00

(54) **Durchlaufwärmetauscher zur Zubereitung von Getränken, insbesondere Wasser-Durchlauferhitzer für Kaffeezubereitungsmaschinen**
Cyclical heat exchanger for preparing drinks, in particular water heating unit for coffee makers
Echangeur thermique en continu destiné à la préparation de boissons, en particulier chauffe-eau instantané pour des machines de préparation de café

(30) Priorität: 20.04.2007 DE 202007005738 U
(43) Veröffentlichungstag der Anmeldung: 08.04.2009
(73) Patentinhaber: Eugster/Frismag AG, 8580 Amriswil (CH)
(72) Erfinder: Mahlich, Gotthard, 61476 Kronberg (DE)
(74) Vertreter: Schubert, Siegmar

(56) Entgegenhaltungen:
- DE-A1- 2 919 110
- DE-A1- 10 350 064
- DE-B3- 10 245 824
- DE-C1- 10 223 903

## Beschreibung

Die Erfindung betrifft einen Durchlaufwärmetauscher zur Zubereitung von Getränken, insbesondere Wasser-Durchlauferhitzer für Kaffeezubereitungsmaschinen nach dem Oberbegriff des Anspruchs 1.

Das Dokument DE 102 45 824 B beschreibt einen Durchlaufwärmetauscher.

Als Durchlaufwärmetauscher sind in diesem Zusammenhang thermische Baueinheiten zu verstehen, die ein durch sie strömendes flüssiges Fluid erhitzen oder kühlen, insbesondere Wasser erhitzen, um mit ihm ein Getränk zu bereiten oder Dampf zu bereiten, wobei die Wärme des Fluid nicht von einem anderen Fluid abgegeben oder aufgenommen zu werden braucht, sondern z.B. von einem festen elektrischen Widerstandsheizer oder durch elektrische-Induktion erzeugt werden kann. In erfindungsgemäß hervorgehobener Anwendung sind Durchlauferhitzer zur Erzeugung von Brühwasser oder Dampf in Kaffeezubereitungsmaschinen solche Durchlaufwärmetauscher.

Für die Erhitzung oder Abkühlung von flüssigen Fluiden im Durchlaufverfahren sind verschiedene Durchlaufwärmetauschersysteme bekannt. Nachteil dieser Systeme ist, dass sie beispielsweise beim Erhitzen von Wasser, abhängig von dessen Härtegrad, mehr oder weniger schnell verkalken oder auch zum Beispiel beim Abkühlen von Fluiden durch Ablagerungen von Verunreinigungen ihre Strömungspfade verengen.

Insbesondere fallen bei der Erhitzung von Wasser in einem Durchlauferhitzer als Durchlaufwärmetauscher im Wasser gebundene Kalziumionen aus und lagern sich bevorzugt an den heißesten Stellen der Wärmequelle, mit der sie beim Strömen durch Strömungspfade in thermischen Kontakt treten, als harter Belag ab. Die Ablagerungen bzw. Verkalkungen stellen nicht nur eine störende Isolierschicht für die Wärmeübertragung dar, sondern verengen auch die Strömungspfade. Diese Verengung kann bis zum völligen Verschluss des Durchlaufwärmetauschers, und damit zum Ausfall oder sogar zur Zerstörung des Durchlaufwärmetauschers und somit zum Nutzungsausfall des gesamten Gerätes führen. Aus diesem Grunde haben die Strömungspfade der Durchlaufwärmetauscher relativ große Querschnitte, um einen möglichst langen störungsfreien Betrieb zu gewährleisten. Große Querschnitte bedürfen aber einer relativ großen Wärmeleistung des gesamten Heizersystems, da, bedingt durch den großen Querschnitt, pro Zeiteinheit größere Wassermengen erhitzt werden müssen, die ihrerseits einen großen Kühleffekt auf das Heizsystem ausüben.

Diese Ablagerungen bzw. Verkalkungen können, solange noch ein Fluss stattfindet, mit Hilfe meist saurer Entkalkungsmittel ganz oder teilweise entfernt werden. In vielen Geräten, die mit Durchlaufwärmetauschern arbeiten, sind deshalb Sensoren zur Anzeige des Verkalkungsgrades angeordnet, die einen Hinweis zur Notwendigkeit einer Entkalkung geben.

Außer einer Entfernung einer erfolgten Verkalkung sind Methoden bekannt, um von vorn herein eine Verkalkung zu vermeiden. Zu diesem Zweck werden zwischen dem Durchlaufwärmetauscher und dem Frischwasserzulauf Ionentauscher geschaltet, die die Kalziumionen gegen Natriumionen austauschen. Diese lonentauschermaterialien sind meist in austauschbaren Kartuschen gekapselt.

Die genannten Entkalkungs- oder Verkalkungsverhinderungsverfahren bedürfen alle des Einsatzes von in einem Zusatzarbeitsgang zuzuführenden chemischen Entkalkungsstoffen oder des Einsatzes von austauschbaren lonentauscherkartuschen. Bei hohen Wasserhärtegraden sind die Ionentauscher sehr schnell verbraucht. Bei kleinen Strömungspfadquerschnitten erfolgt die Verengung durch die Verkalkung sehr schnell, dadurch können nur kleine Mengen der chemischen Entkalkungsmittel die Verkalkungen angreifen, was die Entkalkung erheblich erschwert. Aus diesen Gründen konnten deshalb Wärmetauscher mit geringer Wärmekapazität und kleinen Strömungspfadquerschnitten bisher nicht zum Einsatz kommen.

Ferner ist bekannt, dass Verkalkungen auch durch Beschallung der mit Flüssigkeit gefüllten verkalkten oder durch Verunreinigungen verengten Räume mit Ultraschall beseitigt oder sogar verhindert werden kann. Das Wirkprinzip der Entkalkung und Reinigung ist die durch das Ultraschallfeld entstehende Kavitation, d.h. die Bildung und Auflösung von Hohlräumen in Flüssigkeit durch Druckschwankungen. Das in die Flüssigkeit eingestrahlte Ultraschallfeld erzeugt in dieser Wellen mit Über- und Unterdruck. Trifft eine solche Unterdruckwelle auf ein Hindernis, z.B. Kalkablagerungen, bilden sich an kleinen Luftbläschen größere mit Dampf gefüllte Hohlräume aus. Beim Auftreffen einer darauf folgenden Hochdruckwelle auf den Hohlraum steigt der statische Druck im Hohlraum durch dessen Kompression über den Sättigungsdampfdruck. Dadurch kondensieren die Dampfblasen schlagartig mit Schallgeschwindigkeit. Diese zyklisch entstehenden und verschwindenden Hohlräume wirken auf die Kalziumablagerungen oder sonstigen Ablagerungen ein und zerstören bzw. lösen diese mechanisch.

Der vorliegenden Erfindung liegt die Aufgabe zugrunde, einen Durchlaufwärmetauscher zur Zubereitung von Getränken, insbesondere einen Wasser-Durchlauferhitzer für Kaffeezubereitungsmaschinen, der eingangs genannten Gattung zu schaffen, der kleine Strömungspfadquerschnitte für die zu erwärmende bzw. abzukühlende Flüssigkeit, insbesondere zu erhitzendes Wasser, und demgemäß geringen Wärmeleistungsbedarf aufweisen kann und gleichwohl langzeitig mit hohem Wirkungsgrad zuverlässig funktioniert. Mit einem solchen Durchlauferhitzer in Kaffeezubereitungsmaschinen können eine schnelle Betriebsbereitschaft nach Einschalten des Geräts und ein schneller Wechsel von Kaffeebrühbetrieb auf Dampfzubereitung und umgekehrt erreicht werden.

Diese Aufgabe wird mit einem Durchlaufwärmetauscher mit den Merkmalen des Anspruchs 1 gelöst.

Durch den Einsatz von Ultraschallschwingern, deren Ultraschallfrequenz und Schallleistung abhängig von der Geometrie des zu beschallenden Raumes bzw. der zu beschallenden Struktur optimierbar sind, werden Durchlaufwärmetauscher, insbesondere Durchlauferhitzer für Wasser, mit kleinen Strömungspfadquerschnitten und geringer Wärmekapazität realisierbar.

Hierzu können die Ultraschallschwinger je nach der Konstruktion des Durchlaufwärmetauschers zweckmäßig in diesem integriert sein oder außen an diesen angeflanscht sein.

Vorteilhafte Varianten und Weiterbildungen des Durchlaufwärmetauschers ergeben sich aus den Unteransprüchen 2 bis 14.

Erfindungsgemäß ist der Durchlaufwärmetauscher ein rohrförmiger Durchlaufwärmetauscher .

Erfindungsgemäß ist der Ultraschallschwinger in einer Stirnseite des Durchlaufwärmetauschers integriert.

Im letztgenannten Fall kann der Ultraschallschwinger speziell unkompliziert und wirksam erfindungsgemäß in eine Stirnseite der Außenhülse des rohrförmigen Durchlaufwärmetauschers integriert sein.

Rohrförmige Durchlaufwärmetauscher können erfindungsgemäß alternativ mit jeweils einem elektrischen Widerstandsheizkörper erhitzt werden oder mit Induktionswärme erhitzt werden.

In dem Falle der Erhitzung des Durchlaufwärmetauschers mit Induktionswärme ist eine Induktionsheizung zweckmäßig auf der Außenhülse aus ferromagnetischem Material angeordnet.

Bei den rohrförmigen Durchlaufwärmetauschern mit jeweils einem elektrischen Widerstandsheizkörper kann der Strömungspfad bzw. können die Strömungspfade direkt in Form eines ein- oder mehrgängigen Gewindes in einem elektrischen Widerstandseinsatz geschnitten sein, der im Zentrum des Durchlaufwärmetauschers eingesetzt ist, siehe Anspruch 2, wobei eine Außenbegrenzung des Strömungspfades durch die auf dem Heizstab sitzende Außenhülse gebildet ist.

In einer Variante kann der gewindeförmige Strömungspfad aber auch nach Anspruch 3 innen in der Außenhülse ausgeformt sein.

In einer weiteren Variante der Strömungspfadausbildung kann nach Anspruch 4 ein gewindeförmiger Strömungspfad außen in einer Zwischenhülse ausgeformt sein, die zwischen der Außenhülse und dem elektrischen Widerstandseinsatz angeordnet ist.

Mehrere parallele gewinde- oder schraubenlinienförmige Strömungspfade des Durchlaufwärmetauschers stellen mehrspindlige Strömungspfade gemäß Anspruch 6 dar.

Die Strömungspfade des zu erhitzenden bzw. zu kühlenden Getränks oder Wassers können, soweit diese nicht konstruktionsbedingt gekrümmt, insbesondere schraubenlinienförmig sein sollen, gemäß Anspruch 7 als lineare Strömungspfade ausgebildet sein. Dabei brauchen die Strömungspfade nicht durchgängig linear zu sein.

Insbesondere in dem Fall, in dem der Durchlaufwärmetauscher nach Anspruch 8 als Wasserdurchlauferhitzer mit einem mit dem Strömungspfad oder den Strömungspfaden für das erhitzende Wasser in wärmeleitender Verbindung stehenden Heizer ausgebildet ist, kann dieser entlang dem Strömungspfad Zonen unterschiedlicher Heizleistungen aufweisen, wobei eine erste der Zonen, die am nächsten zu einem Eintritt des Wassers in den Strömungspfad angeordnet ist, eine höhere Heizleistung aufweist als andere der Zonen. Damit kann der Grad der Verkalkung entlang des Strömungspfads so eingestellt werden, dass diese in der ersten der Zonen, die am nächsten zu dem Eintritt des Wassers in den Strömungspfad angeordnet ist, höher ist als in anderen der Zonen, die dem Strömungspfad weiter stromabwärts des Eintritts benachbart sind, was insbesondere bei differenzierten Strömungspfadquerschnitten benachbart den Zonen vorteilhaft sein kann, wie weiter unten ausgeführt wird.

Wenn der Durchlaufwärmetauscher bzw. Wasserdurchlauferhitzer, wie bevorzugt, Bestandteil einer Kaffeemaschine ist, kann nach Anspruch 9 zweckmäßig auch eine zweite Zone, nämlich diejenige, die am nächsten zu einem Austritt des Wassers aus dem Strömungspfad angeordnet ist, eine höhere Heizleistung als eine andere der Zonen des Heizers aufweisen, die einem Strömungspfadabschnitt stromaufwärts des Austritts benachbart ist. In diesem Fall wird bei einer Umschaltung von Kaffeezubereitung auf Dampfbetrieb des Wasserdurchlauferhitzers vermieden, dass vor einem Dampfaustritt sogenanntes Vorlaufwasser aus dem Wasserdurchlauferhitzer austritt.

Die oben erwähnte differenzierte Gestaltung des Strömungspfadquerschnitts des Strömungspfads des zu erhitzenden Wassers bzw. Getränks kann gemäß Anspruch 10 dadurch erzielt werden, dass die Tiefe des Strömungspfads in Strömungsrichtung zu dem Austritt des Strömungspfads hin abnimmt.

Alternativ oder zusätzlich kann aber auch vorgesehen sein, dass die Steigung des gewindeförmig ausgebildeten Strömungspfads in Strömungsrichtung von dem Eintritt des Getränks bzw. Wassers in den Strömungspfad zu dessen Austritt hin abnimmt, woraus sich ebenfalls ein sich verringernder Strömungspfadquerschnitt ergeben kann.

In beiden Fällen resultiert aus dem relativ großen Strömungspfadquerschnitt am Anfang des Strömungspfads in Verbindung mit der oben genannten relativ hohen Heizleistung in der benachbarten Zone des Heizers eine verhältnismäßig starke Verkalkung, wodurch die Verkalkung des nachfolgenden Abschnitts des Strömungskanals verhältnismäßig gering gehalten wird. In dem Abschnitt größeren Querschnitts kann die vergleichsweise eher eintretende Verkalkung weniger stören, weil dieser Abschnitt besser entkalkt werden kann, auch deswegen, weil die in ihm vorhandene größere Wassermenge zu einer besseren Einkopplung des Ultraschalls in das Wasser führt.

Zu dem gleichen Zweck der guten Einkopplung des Ultraschalls kann gemäß Anspruch 12 in dem Durchlaufwärmetauscher zwischen dem Ultraschallschwinger und dem Strömungspfad ein Fluidsammelraum ausgebildet sein.

Zu der erfindungsgemäßen Anwendung können Ultraschallschwinger mit unterschiedlichen Wirkprinzipien eingesetzt werden, insbesondere gemäß Anspruch 13 Piezoschwinger oder gemäß Anspruch 14 magnetoresistive Schwinger.

Ausführungsbeispiele der Erfindung sind in der Zeichnung mit drei Figuren dargestellt und nachfolgend beschrieben, woraus sich weitere vorteilhafte Einzelheiten ergeben können.

Es zeigt:
- Figur 1: eine erste Ausführungsform eines Durchlaufwärmetauschers in einer Seitenansicht, teilweise geschnitten,
- Figur 2: eine zweite Ausführungsform des Durchlaufwärmetauschers, ebenfalls in einer Seitenansicht, teilweise geschnitten, und
- Figur 3: eine dritte Ausführungsform des Durchlaufwärmetauschers in einer Seitenansicht.

Gleiche Teile sind in den Figuren mit übereinstimmenden Bezugszeichen versehen.

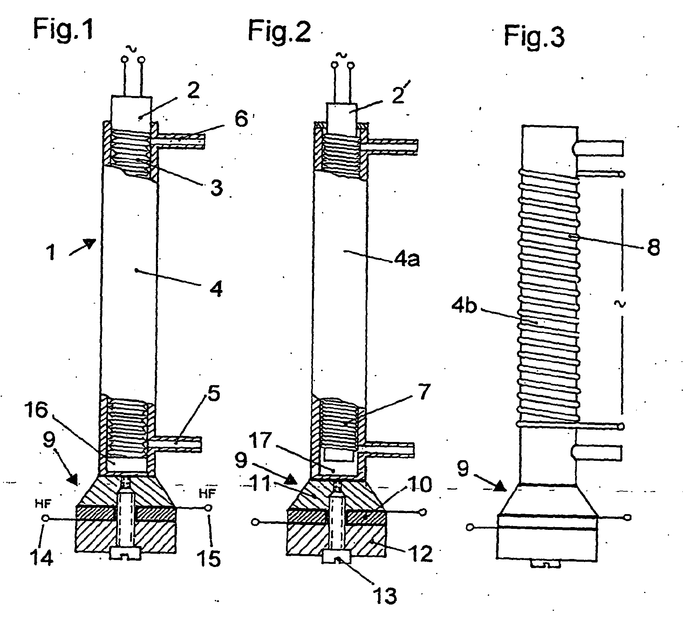

Die erste Ausführungsform des Durchlaufwärmetauschers nach Figur 1 zeigt einen rohrförmigen Durchlaufwärmetauscher 1 mit innen liegendem elektrischen Widerstandsheizeinsatz 2 und integriertem Ultraschallschwinger 9. Ein Strömungspfad 3 für das zu erhitzende Wasser ist in Form eines Gewindes direkt auf den Heizeinsatz 2 geschnitten. Die Außenbegrenzung des Strömungspfades wird durch eine fest auf dem Heizeinsatz 2 sitzende Außenhülle 4 gebildet. Der Zuleitung eines flüssigen Fluids, insbesondere Kaltwasser, dient ein Fluideintrittsstutzen 5 und der Ableitung des erhitzten Fluids bzw. Wassers ein Fluidaustrittsstutzen 6, die mit Anfang bzw. Ende des Strömungspfads 3 in fluidleitender Verbindung stehen. Zwischen einer Unterseite des Widerstandsheizeinsatzes 2 und einem an den Ultraschallschwinger 9 angrenzenden Boden des Außenhülse 4 ist in dieser ein Fluidsammelraum 16 ausgebildet, der über einen Abschnitt des Strömungspfades 3 ebenfalls mit dem Wassereintrittsstutzen 5 verbunden ist. Das Fluid bzw. Wasser in dem Fluidsammelraum 1 6 gewährleistet eine effektive Übertragung der Ultraschallleistung von dem Ultraschallschwinger 9 auf das Fluid bzw. Wasser in dem Strömungskanal 3 bei Entkalkungsbetrieb.

Die zweite Ausführungsform des Durchlaufwärmetauschers gemäß Figur 2 ist ebenfalls rohrförmig und umfasst ebenfalls einen innen liegenden elektrischen Widerstandseinsatz 2' sowie einen integrierten Ultraschallschwinger 9.

Es handelt sich bei den Ausführungsformen gemäß den Figuren 1 - 3 um die gleiche piezoelektrische Bauart des Ultraschallschwingers mit einer mit Hochfrequenzanschlüssen 14, 15 versehener Piezoscheibe 10 zwischen einem Ankopplungskonus 11 an dem Boden der Außenhülse 4 bzw. 4' und einer Gegenlastscheibe 12, wobei diese Elemente des Ultraschallschwingers 9 durch eine Schraube 13 zusammengehalten werden, die eine mechanische Vorspannung erzeugt.

Bei der zweiten Ausführungsform werden Strömungspfade durch jeweils einen Zwischenraum gebildet, den eine auf den Heizeinsatz 2' aufgebrachte Schraubenfeder 7 zu dem Widerstandsheizeinsatz 2 einerseits bzw. der Außenhülse 4' andererseits freilässt. Die Strömungspfade verlaufen dabei in der Schraubenfeder 7 schraubenlinienförmig.

Bei Verwendung von elektrischen Widerstandsheizern bzw. Widerstandsheizeinsätzen können die die Strömungspfade bildenden Durchlauferhitzerteile aus verschiedenen wärmeresistenten und gut wärmeleitenden, bevorzugt metallischen Materialien bestehen.

Eine dritte Ausführungsform des Durchlauferhitzers gemäß Figur 3 mit integriertem Ultraschallschwinger unterscheidet sich von der ersten Ausführungsform und der zweiten Ausführungsform dadurch, dass die Heizung des Durchlauferhitzers durch eine Induktionsheizung 8 auf der Außenhülse 4b aus ferromagnetischem Material realisiert ist.

Der elektrische Widerstandseinsatz 2 bzw. 2' in den Figuren 1 und 2 und die Induktionsheizung 8 in Figur 3, die jeweils einen Heizer darstellen, können über ihre Länge bzw. Höhe Zonen unterschiedlicher Heizleistungen aufweisen, z.B. entsprechend unterschiedlicher Steigung der schraubenlinienförmigen Induktionsheizung 8, wobei vorteilhaft die Zonen benachbart dem Fluideintrittsstutzen, z.B. 5, und benachbart dem Fluidaustrittsstutzen, z.B. 6, mit erhöhter Heizleistung dimensioniert sind.

Die Temperatur des Heizers bzw. dessen Zonen wird zweckmäßig mit - nicht dargestellten - Temperatursensoren überwacht und geregelt.

Statt des in den Figuren 1 und 2 dargestellten Widerstandseinsatzes 2 bzw. 2' als innenliegender elektrischer Widerstandsheizer kann in anderer Ausführungsform des Durchlaufwärmetauschers ein Widerstandsheizer außenliegend angeordnet sein.

In den Figuren 1 und 2 sind der Strömungspfad 3 bzw. die Schraubenfeder 7, die wenigstens einen Strömungspfad begrenzt, über deren Länge gleichmäßig dargestellt. Es kann jedoch vorteilhaft sein, die Tiefe des Gewindes, welches den Strömungspfad z.B. 3 bildet, oder die Steigung der Schraubenfeder 7 im Bereich des Fluideintrittsstutzens, z.B. 5, wesentlich größer als im weiteren Verlauf der Durchlaufstrecke bzw. des Strömungspfades zu gestalten. Gegebenenfalls kann dabei die Gewindetiefe oder die Steigung ausgehend von dem Fluideintrittsstutzen, z.B. 5, kontinuierlich abnehmen. Die größere Gewindetiefe oder die größere Steigung ergibt in Verbindung mit einer erhöhten Heizleistung, die wie oben dargestellt in der benachbarten Zone des Heizers vorgesehen ist, örtlich eine stärkere Kalziumausscheidung, die wegen des größeren Querschnitts dieses Strömungspfadabschnitts erst spätere Beschallung erfordert und den Strömungspfadabschnitt kleineren Querschnitts weniger schnell verkalken oder verschmutzen lässt. Eine weitere Zone erhöhter Heizleistung, nämlich bei dem Fluidaustrittsstutzen, z.B. 6, hat hingegen den Zweck, bei Umschalten Heißwassererzeugung für Kaffeezubereitung auf Dampferzeugung sogenanntes Vorlaufwasser zu vermeiden.

Im nachfolgenden wird die Funktion der verschiedenen Ausführungsformen des Durchlaufwärmetauschers mit Ultraschallschwinger beschrieben:

Bezugnehmend auf die Figuren 1 bis 3 tritt insbesondere Kaltwasser zur Heißwassererzeugung oder Dampferzeugung unter Leitungs- oder Pumpendruck über den Fluideintrittsstutzen 5 in den rohrförmigen Durchlauferhitzer 1 ein und wird in dem Strömungspfad 3 oder den Strömungspfaden durch den Durchlauferhitzer 1 gefördert. Während des Durchlaufs wird das Wasser in dem rohrförmigen Durchlauferhitzer 1 je nach Ausführungsform mittels des elektrischen Widerstandsheizeinsatzes 2 oder mittels der Induktionsheizung 8 erhitzt und tritt über den Fluidaustrittsstutzen 6 aus.

Eine Beschallung des Durchlaufwärmetauschers 1 und des in ihm befindlichen Fluid mittels des in den Durchlaufwärmetauscher integrierten oder an den Durchlaufwärmetauscher angeflanschten Ultraschallschwingers 9 kann sowohl automatisch während jedes Zubereitungszyklus eines Getränks oder nach einer vorgegebenen Anzahl Zubereitungszyklen intervallmäßig, oder in einem gesonderten Durchlauf, oder während eines Spülvorganges stattfinden, der vor oder nach einem Zubereitungszyklus erfolgt.

### Bezugszahlenliste

- 1: rohrförmiger Durchlaufwärmetauscher
- 2, 2': elektrischer Widerstandsheizeinsatz
- 3: Strömungspfad
- 4, 4a, 4b: Außenhülse
- 5: Fluideintrittsstutzen
- 6: Fluidaustrittsstutzen
- 7: Schraubenfeder
- 8: Induktionsheizung
- 9: Ultraschallschwinger
- 10: Piezoscheibe
- 11: Ankopplungskonus
- 12: Gegenlastscheibe
- 13: Schraube (mechanische Vorspannung)
- 14: HF-Anschluss
- 15: HF-Anschluss
- 16: Fluidsammelraum
- 17: Fluidsammelraum

## Patentansprüche

1. Durchlaufwärmetauscher zur Zubereitung von Getränken, insbesondere Wasser-Durchlauferhitzer für Kaffeezubereitungsmaschinen, mit wenigstens einem Strömungspfad (3) des zu erhitzenden bzw. zu kühlenden Getränks oder Wassers,
wobei ein Ultraschallschwinger (9, 21) mit dem Strömungspfad (3) in ultraschallleitender Verbindung steht,
**dadurch gekennzeichnet,**
**dass** der Durchlaufwärmetauscher als rohrförmiger Durchlaufwärmetauscher (1) ausgebildet ist,
**dass** der rohrförmige Durchlaufwärmetauscher (1) eine im wesentlichen zylindrische Außenhülse (4, 4a, 4b) aufweist,
**dass** in der Außenhülse (4, 4a, 4b) ein elektrischer Widerstandseinsatz (2, 2') angeordnet ist oder
auf der Außenhülse (4b) aus ferromagnetischem Material eine Induktionsheizung (8) angeordnet ist und
**dass** der Ultraschallschwinger (9) in eine Stirnseite der Außenhülse (4) integriert ist.

2. Durchlaufwärmetauscher nach Anspruch 1,
**dadurch gekennzeichnet,**
**dass** auf dem elektrischen Widerstandsheizeinsatz (2) der Strömungspfad (3) des zu erhitzenden Getränks oder Wassers in Form eines Gewindes ausgeformt ist und
**dass** eine Außenbegrenzung des Strömungspfades durch die fest auf dem Heizeinsatz sitzende Außenhülse (4) gebildet ist.

3. Durchlaufwärmetauscher nach Anspruch 1,
**dadurch gekennzeichnet,**
**dass** ein gewindeförmiger Strömungspfad (3) innen in der Außenhülse (4) ausgeformt ist.

4. Durchlaufwärmetauscher nach Anspruch 1,
**dadurch gekennzeichnet,**
**dass** zwischen der Außenhülse und dem elektrischen Widerstandseinsatz eine Zwischenhülse angeordnet ist und
**dass** ein gewindeförmiger Strömungspfad außen in der Zwischenhülse ausgeformt ist.

5. Durchlaufwärmetauscher nach Anspruch 1,
**dadurch gekennzeichnet,**
**dass** in der Außenhülse (4) ein elektrischer Widerstandseinsatz (2') angeordnet ist, auf den eine Schraubenfeder (7) aufgebracht ist, welche mit der Außenhülse einen äußeren Strömungspfad bildet und mit dem Widerstandseinsatz (2') einen inneren Strömungspfad bildet.

6. Durchlaufwärmetauscher nach einem der Ansprüche 1 bis 5,
**gekennzeichnet durch**
mehrspindlige Strömungspfad.

7. Durchlaufwärmetauscher nach Anspruch 1.
**gekennzeichnet durch**
lineare Strömungspfade.

8. Durchlaufwärmetauscher nach einem der vorangehenden Ansprüche **dadurch gekennzeichnet,**
**dass** ein mit dem wenigstens einem Strömungspfad (3) in wärmeleitender Verbindung stehender Heizer entlang Abschnitten des Strömungspfads (3) Zonen unterschiedlicher Heizleistungen aufweist, und
**dass** eine erste der Zonen, die in dem Strömungspfad am nächsten zu einem Eintritt des Wassers angeordnet ist, eine höhere Heizleistung aufweist als eine andere der Zonen.

9. Durchlaufwärmetauscher nach Anspruch 8,
**dadurch gekennzeichnet,**
**dass** auch eine zweite der Zonen, die in dem Strömungspfad am nächsten zu einem Austritt des Wassers angeordnet ist, eine höhere Heizleistung besitzt als eine andere der Zonen.

10. Durchlaufwärmetauscher nach den Ansprüchen 2 bis 5,
**dadurch gekennzeichnet,**
**dass** die Tiefe des Strömungspfads (3) in Strömungsrichtung des Getränks bzw. Wassers in dem Strömungspfad (3) zu dessen Austritt hin abnimmt.

11. Durchlaufwärmetauscher nach den Ansprüchen 2 bis 4,
**dadurch gekennzeichnet,**
**dass** die Steigung des gewindeförmigen Strömungspfads (3) in Strömungsrichtung von dem Eintritt des Getränks bzw. Wassers in den Strömungspfad zu dessen Austritt hin abnimmt.

12. Durchlaufwärmetauscher nach einem der vorangehenden Ansprüche,
**dadurch gekennzeichnet,**
**dass** in dem Durchlaufwärmetauscher zwischen dem Ultraschallschwinger (9) und dem Strömungspfad (3) ein Fluidsamrnelraum (16, 17) ausgebildet ist.

13. Durchlaufwärmetauscher nach einem der vorangehenden Ansprüche,
**gekennzeichnet durch**
einen Piezo-Schwinger als Ultraschallschwinger (9).

14. Durchlaufwärmetauscher nach einem der Ansprüche 1 bis 12,
**gekennzeichnet durch**
einen magnetostriktiven Schwinger als Ultraschallschwinger (9).

## Claims

1. Cyclical heat exchanger for preparing drinks, in particular water heating unit for coffee makers having at least one flow path (3) of the drink or water to be heated or cooled,
wherein an ultrasonic generator (9, 21) is in ultrasonically conductive connection with the flow path,
**characterized in**
**that** the cyclical heat exchanger is designed as a tubular cyclical heat exchanger (1),
**that** the tubular cyclical heat exchanger (1) includes a substantially cylindrical outer shell (4, 4a, 4b),
**that** in the outer shell (4, 4a, 4b) an electric resistance insert (2, 2' is arranged or
on the outer shell (4b) of ferromagnetic material an induction heating (8) is arranged and
**that** the ultrasonic generator (9) is integrated in one front side of the outer shell (4).

2. Cyclical heat exchanger according to claim 1, **characterized in**
**that** on the electric resistance heating insert (2), the flow path (3) of the drink or water to be heated is formed out in the shape of a thread
and **that** an outer limitation of the flow path is defined by the outer shell (4) provided on the heating insert.

3. Cyclical heat exchanger according to claim 1,
**characterized in**
**that** a thread-shaped flow path (3) is formed out at the inside of the outer shell (4).

4. Cyclical heat exchanger according to claim 1,
**characterized in**
**that** between the outer shell and the electric resistance insert an intermediate shell is arranged and
**that** a thread-shaped flow path is formed out at the outside of the intermediate shell.

5. Cyclical heat exchanger according to claim 1
**characterized in**
**that** in the outer shell (4), an electric resistance insert (2') is arranged on which a helical spring (7) is applied which together with the outer shell forms an outer flow path and with the resistance insert (2') forms an inner flow path.

6. Cyclical heat exchanger according to one of claims 1 to 5,
**characterized by**
multi-spindle flow paths.

7. Cyclical heat exchanger according to claim 1,
**characterized by**
linear flow paths.

8. Cyclical heat exchanger according to one of the foregoing claims,
**characterized in**
**that** a heater which is in heat conductive connection with the at least one flow path (3) includes, along sections of the flow path (3), zones of different heating capacity and
**that** a first one of the zones disposed in the flow path nearest to the entry of the water has a higher heating capacity than another one of the zones.

9. Cyclical heat exchanger according to claim 8,
**characterized in**
**that** also a second one of the zones disposed in the flow path nearest to the exit of the water has a higher heating capacity than another one of the zones.

10. Cyclical heat exchanger according to claims 2 to 5,
**characterized in**
**that** the depth of the flow path (3) decreases in the flow direction of the drink or water in the flow path (3) towards its exit.

11. Cyclical heat exchanger according to claims 2 to 4,
**characterized in**
**that** the pitch of the thread-shaped flow path (3) decreases in the flow direction from the entry of the drink or the water into the flow path towards its exit

12. Cyclical heat exchanger according to one of the foregoing claims,
**characterized in**
**that** in the cyclical heat exchanger, between the ultrasonic generator (9) and the flow path (3), a fluid collecting room (16, 17) is provided.

13. Cyclical heat exchanger according to one of the foregoing claims,
**characterized by** a piezo vibrator as the ultrasonic generator (9).

14. Cyclic heat exchanger according to one of claims 1 to 12,
**characterized by**
a magnetostrictive transducer as the ultrasonic generator (9).

## Revendications

1. Echangeur thermique en continu pour la préparation de boissons, en particulier chauffe-eau instantané pour machines à café, comprenant au moins un trajet d'écoulement (3) de la boisson ou de l'eau à chauffer ou à refroidir,
dans lequel un oscillateur à ultrasons (9, 21) est en liaison conductrice d'ultrasons avec le trajet d'écoulement (3),
**caractérisé en ce que**
l'échangeur thermique en continu est conçu en tant qu'échangeur thermique en continu tubulaire (1),
**en ce que** l'échangeur thermique en continu tubulaire (1) présente une gaine extérieure (4, 4a, 4b) sensiblement cylindrique,
**en ce qu'**est disposée dans la gaine extérieure (4, 4a, 4b) une cartouche chauffante électrique (2, 2') ou
**en ce qu'**est disposé sur la gaine extérieure (4b) en matériau ferromagnétique un chauffage à induction (8), et
**en ce que** l'oscillateur à ultrasons (9) est intégré dans une face avant de la gaine extérieure (4).

2. Echangeur thermique en continu selon la revendication 1,
**caractérisé en ce que** sur la cartouche chauffante électrique (2), le trajet d'écoulement (3) de la boisson ou de l'eau à chauffer est réalisé sous la forme d'un filet, et
**en ce qu'**une limitation extérieure du trajet d'écoulement est formée par la gaine extérieure (4) fixée sur la cartouche chauffante (4).

3. Echangeur thermique en continu selon la revendication 1,
**caractérisé en ce qu'**un trajet d'écoulement (3) en forme de filet est formé à l'intérieur dans la gaine extérieure (4).

4. Echangeur thermique en continu selon la revendication 1,
**caractérisé en ce qu'**est disposée une gaine intermédiaire entre la gaine extérieure et la cartouche chauffante électrique, et
**en ce qu'**un trajet d'écoulement en forme de filet est formé à l'extérieur dans la gaine intermédiaire.

5. Echangeur thermique en continu selon la revendication 1,
**caractérisé en ce qu'**est disposée dans la gaine extérieure (4) une cartouche chauffante électrique (2') sur laquelle est appliqué un ressort hélicoïdal (7) qui forme avec la gaine extérieure un trajet d'écoulement extérieur et avec la cartouche chauffante (2') un trajet d'écoulement intérieur.

6. Echangeur thermique en continu selon l'une des revendications 1 à 5,
**caractérisé par**
des trajets d'écoulement multi-axes.

7. Echangeur thermique en continu selon la revendication 1, **caractérisé par**
des trajets d'écoulement linéaires.

8. Echangeur thermique en continu selon l'une des revendications précédentes,
**caractérisé en ce qu'**un réchauffeur en liaison thermoconductrice avec le trajet d'écoulement (3), au moins au nombre de un, présente, le long de sections du trajet d'écoulement (3), des zones de puissances calorifiques différentes, et
**en ce qu'**une première desdites zones, qui est la plus proche de l'admission d'eau dans le trajet d'écoulement, présente une puissance calorifique plus élevée qu'une autre desdites zones.

9. Echangeur thermique en continu selon la revendication 8,
**caractérisé en ce que**
également une deuxième desdites zones, qui est la plus proche de la sortie d'eau dans le trajet d'écoulement, présente une puissance calorifique plus élevée qu'une autre desdites zones.

10. Echangeur thermique en continu selon les revendications 2 à 5,
**caractérisé en ce que**
la profondeur du trajet d'écoulement (3), dans la direction d'écoulement de la boisson ou de l'eau, diminue vers la sortie du trajet d'écoulement (3).

11. Echangeur thermique en continu selon les revendications 2 à 4,
**caractérisé en ce que** le pas du trajet d'écoulement (3) en forme de filet diminue dans la direction d'écoulement depuis l'entrée de la boisson ou de l'eau dans le trajet d'écoulement vers sa sortie.

12. Echangeur thermique en continu selon l'une des revendications précédentes,
**caractérisé en ce qu'**est formé un espace de collecte de fluide (16, 17) dans l'échangeur thermique, entre l'oscillateur à ultrasons (9) et le trajet d'écoulement (3).

13. Echangeur thermique en continu selon l'une des revendications précédentes,
**caractérisé par** un oscillateur piézoélectrique en tant qu'oscillateur à ultrasons (9).

14. Echangeur thermique en continu selon l'une des revendications 1 à 12,
**caractérisé par** un oscillateur magnétostrictif en tant qu'oscillateur à ultrasons (9).
